# EUROPÄISCHE PATENTSCHRIFT

(11) **EP 1 370 503 B1**
(45) Veröffentlichungstag und Bekanntmachung des Hinweises auf die Patenterteilung: **28.09.2005**
(21) Anmeldenummer: 02704765.3
(22) Anmeldetag: 21.03.2002
(51) Int. Cl.: C04B 24/38, C04B 24/16

(54) **VERWENDUNG VON WASSERLÖSLICHEN POLYSACCHARID-DERIVATEN ALS VERFLÜSSIGER FÜR MINERALISCHE BINDEMITTELSUSPENSIONEN**
USE OF WATER-SOLUBLE POLYSACCHARIDE DERIVATIVES AS FLUDIFIERS FOR MINERAL BINDER SUSPENSIONS
UTILISATION DE DERIVES DE POLYSACCHARIDES SOLUBLES DANS L'EAU EN TANT QUE FLUIDIFIANTS POUR LIANTS MINERAUX EN SUSPENSION

(30) Priorität: 22.03.2001 DE 10113975
(43) Veröffentlichungstag der Anmeldung: 17.12.2003
(73) Patentinhaber: Degussa Construction Chemicals GmbH, 83308 Trostberg (DE)
(72) Erfinder: EINFELDT, Lars, 07743 Jena (DE); ALBRECHT, Gerhard, 83342 Tacherting (DE); KERN, Alfred, 84558 Kirchweidach (DE); VIEIRA, Matilde, Calado, P-8375010 Messines (PT); KLEMM, Dieter, 99425 Weimar (DE)
(74) Vertreter: Dey, Michael
(86) Internationale Anmeldenummer: PCT/EP2002/003191
(87) Internationale Veröffentlichungsnummer: WO 2003/002479

(56) Entgegenhaltungen:
- EP-A- 0 554 749
- EP-A- 0 573 852
- EP-A- 0 816 299
- CH-A- 418 209
- DE-A- 2 060 106
- DE-A- 3 910 730
- DE-A- 19 543 304
- GB-A- 2 080 812
- US-A- 4 466 837
- US-A- 4 707 187
- "CARBOXYMETHYLATED OR SUFOETHOXYLATED METHYL HYDROSYETHYL OR METHYL HYDROXYPROPYL CELLULOSE ETHERS IN BUILDING APPLICATIONS" RESEARCH DISCLOSURE, KENNETH MASON PUBLICATIONS, HAMPSHIRE, GB, Nr. 418, Februar 1999 (1999-02), Seite 209 XP000893230 ISSN: 0374-4353

## Beschreibung

Die vorliegende Erfindung betrifft die Verwendung von speziellen wasserlöslichen Polysaccharid-Derivaten als Verflüssiger für mineralische Bindemittelsuspensionen.

Die bisher bekannten und handelsüblichen Dispergiermittel insbesondere für Mörtel und Beton sind entweder Kondensationsprodukte, wie z.B. sulfonierte Naphthalin-Formaldehyd-Kondensationsprodukte (vgl. EP-PS 214 412) oder sulfonierte Melamin-Formaldehyd-Kondensationsprodukte (vgl. DE-PS 16 71 017) oder Polymerverbindungen, wie z.B. Polyethercarboxylate (vgl. EP-A 736 553).

Diese sogenannten Superverflüssigungsmittel ("Superplasticizer") stellen biologisch nicht bzw. nur schwer abbaubare Polymere dar. Will man diese herkömmlichen Dispergiermittel gegen biologisch abbaubare Fließmittel ersetzen, so ist es naheliegend von Polysacchariden auszugehen, zumal diese umweltfreundlich aus nachwachsenden Rohstoffen gewonnen werden können, prinzipiell in unerschöpflichem Ausmaß (z.B. Stärke oder Cellulose) zur Verfügung stehen und aus ökologischer Sicht eine Alternative zu den petrochemischen Polymeren darstellen.

Bislang wurden in mineralischen Bindemitteln eine Vielzahl von Polysacchariden (z.B. Pullulan, Curdlan, Dextran, Xanthan, Welan, Rhamsan als mikrobielle Exopolysaccharide; Algin, Carageenan, Agar als marine Polysaccharide; Locust Bean, Gummi Arabicum als pflanzliche Exudate) bzw. Polysaccharid-Derivaten (z.B. Celluloseether, wie HEC, CMHEC, HPMC oder Ester und Ether der Stärke) als viskositätsmodifizierende Agentien (VMA) zugesetzt. Nachteilig bei den bisher verwendeten Polysaccharid-Derivaten ist die Tatsache, dass sie hochmolekular sind und bereits bei geringer Konzentration in Wasser eine außerordentlich hohe Viskosität besitzen.

Bislang näher untersuchte Polysaccharid-Derivate als Superverflüssiger sind ausnahmslos anionisch substituierte Polysaccharide, insbesondere Polysaccharid-Sulfate (DE-OS 44 07 499, DE-OS 199 21 175) und Sulfoalkyl-Polysaccharide (DE-OS 34 06 745). Beschrieben sind hierbei im Wesentlichen Sulfoalkyl-Polysaccharide mit Polymerisationsgraden (DP) < 100, wobei im Besonderen von Stärken ausgegangen wird, die in ihrer nativen Form üblicherweise einen Amyloseanteil von 20 bis 25 % besitzen. Als Polysaccharid-Sulfate werden im Allgemeinen hydrolysierte bzw. depolymerisierte Polysaccharide jeglicher Herkunft und im Besonderen nichtionische Celluloseether, Curdlan oder verschiedene Stärken bzw. Stärkederivate offenbart.

Als nachteilig hat sich jedoch herausgestellt, dass die Verflüssigungswirkung dieser Polysaccharid-Derivate in vielen Anwendungsbereichen im Vergleich zu den herkömmlichen Fließmitteln noch nicht optimal ist.

Der vorliegenden Erfindung lag daher die Aufgabe zugrunde, wasserlösliche Polysaccharid-Derivate als Verflüssiger für mineralische Bindemittel bereitzustellen, welche die genannten Nachteile des Standes der Technik nicht aufweisen, sondern im Vergleich zu den herkömmlichen Fließmitteln gute anwendungstechnische Eigenschaften aufweisen.

Diese Aufgabe wurde erfindungsgemäß dadurch gelöst, dass man als Polysaccharid-Derivat eine partiell hydrolysierte amylosereiche Stärke einsetzt, die noch Sulfoalkylgruppen mit 1 bis 4 C-Atomen aufweist, wobei der Amyloseanteil der partiell hydrolysierten amylosereichen Stärke 30 bis 90 Gew.-% beträgt.

Es hat sich hierbei überraschenderweise gezeigt, dass die erfindungsgemäß vorgeschlagenen Polysaccharid-Derivate aufgrund ihrer relativ geringen Molekulargewichte eine außerordentlich geringe Viskosität besitzten, die über einen anwendungstechnisch weiten Scherbereich eine recht hohe Konstanz aufweist. Außerdem wird die Verflüssigungswirkung der herkömmlichen Fließmittel durch die erfindungsgemäßen Polysaccharid-Derivate zum Teil deutlich übertroffen, was ebenfalls nicht vorhersehbar war.

Die erfindungsgemäß vorgeschlagenen Polysaccharid-Derivate bestehen aus partiell hydrolysierten Stärken.

Die erfindungsgemäßen partiell hydrolysierten amylosereichen Stärken sollten vorzugsweise einen Polymerisationsgrad (DP) von 40 bis 500 besitzen und der Amyloseanteil der eingesetzten Stärken sollte besonders bevorzugt 40 bis 75 Gew.-% betragen. Gemäß einer bevorzugten Ausführungsform enthalten die amylosereichen Stärken noch Sulfoalkylgruppen mit einem bevorzugten Substitutionsgrad (DS) von 0,2 bis 2,0. Als besonders bevorzugt sind hierbei Sulfoethylgruppen mit einem Substitutionsgrad (DS) von 0,3 bis 1,0 anzusehen.

Die relativ niedrigen Molekulargewichte der erfindungsgemäß vorgeschlagenen Polysaccharid-Derivate können durch bekannte säurehydrolytische Verfahren der Stärke, beispielsweise in Form von Maisstärke, Wachsmaisstärke oder Kartoffelstärke (Fox, J.D., and Robyt, J.F. (1992) *Carbohydr. Res.* **227**, 163-170; Galinsky, G. and Burchard, W. (1995) *Macromolecules* **28**, 2363-2370; Singh, V.S. and Ali, S.Z. (2000) *Carbohydr. Polym.* **41**, 191-195) gewonnen werden. Bei den Stärken ist die partielle Depolymerisation außerordentlich von den verwendeten Hydrolysebedingungen (z.B. Suspensionsmedium, Mineralsäure, Konzentration der Mineralsäure, Hydrolysezeit und -temperatur) abhängig.

Die Funktionalisierung der partiell hydrolysierten Stärken erfolgt ebenfalls nach bekannten Methoden.

Für die Einführung der Sulfoalkylgruppen in die amylosereiche Stärke haben sich als Sulfoalkylierungsmittel vor allem halogen- oder alkylenoxidhaltige Alkylsulfonate, Sultone, insbesondere aber wässrige Lösungen von Natriumvinylsulfonat bewährt.

Die erfindungsgemäßen Polysaccharid-Derivate eignen sich aufgrund ihrer geringen Viskosität und ihrer guten Verflüssigungswirkung hervorragend als Verflüssiger für mineralische Bindemittelsuspensionen, insbesondere auf Basis von Zement, Kalk und/oder Gips, wobei sie in einer Menge von 0,1 bis 5 Gew.-%, bezogen auf den Bindemittelgehalt der entsprechenden hydraulisch erhärteten Baustoffmischungen (wie z.B. Mörtel, Beton oder Gips) eingesetzt werden.

Die nachfolgenden Beispiele sollen die Erfindung näher veranschaulichen.

### Beispiele

### Beispiel 1 (Vergleichsbeispiel):

### Carboxymethylhydroxyethylcellulose (CMHEC)

146 g LODP-Cellulose (hydrolysierter Fichtensulfitzellstoff) wurden in einem Druckreaktor mit Argonatmosphäre in 1 l einer 87 % (w/w) t-Butanollösung suspendiert, und mit 1 moleq. 20 N NaOH für 1 h bei 50 °C alkalisiert. Anschließend wurden bei Raumtemperatur 5 moleq. Ethylenoxid innerhalb von 30 min zugegeben, für 3 h bei 70 °C gerührt, abgekühlt und mit Essigsäure neutralisiert. Das Suspensionsmittel wurde abdekantiert, und das Produkt in Aceton resuspendiert, abgenutscht und getrocknet.

0,3 mol des Rohproduktes dieser Hydroxyethylcellulose (HEC) wurden in 800 ml Isopropanol suspendiert und unter Argonatmosphäre mit 3 moleq. 20 N NaOH für 1 h bei Raumtemperatur alkalisiert. Anschließend wurden bei Raumtemperatur 1,5 moleq. Chloressigsäure - gelöst in Isopropanol (Chloressigsäure : Isopropanol = (w/v) 1:2) - zugetropft, für 3 h bei 70 °C gerührt, abgekühlt und mit Essigsäure neutralisiert. Das Produkt wird abgenutscht und die wasserlöslichen Bestandteile (Salze, niedermolekulare Kohlenhydrate) konnten weitestgehend durch Waschprozesse, z.B. mit wässrigem Methanol oder wässrigem Aceton abgetrennt werden. Es wurde eine Substitution von MSHE = 3,57 und DSCM = 1,47 erreicht. (Für die beschriebenen Untersuchungen wurde die CMHEC in Wasser gelöst und 3 Tage gegen Wasser dialysiert).

### Beispiel 2:

### Sulfoethylstärke (SES)

*Varianie A:* 15 g partiell hydrolysierte Amylomaisstärke Wurden in 750 ml Isopropanol suspendiert und unter Argonatmosphäre mit 3 moleq. einer 50 %-igen NaOH-Lösung für 1,5 h bei Raumtemperatur alkalisiert. 1,5 moleq. einer 30 %-igen Natriumvinylsulfonatlösung wurden in 3 Portionen in 2 h langsam zugetropft und 5 h bei 55 °C gerührt.

*Varinate B:* 10 g partiell hydrolysierte Amylomaisstärke wurden in 270 ml Isopropanol suspendiert und unter Argonatmosphäre zu 1,2 moleq. einer ca. 50 %-igen Natriumvinylsulfonatlösung - die zuvor frisch durch Einengen einer 30 %-igen Natriumvinylsulfonatlösung unter vermindertem Druck hergestellt wurde - langsam zugetropft. 2,3 moleq. an gepulvertem NaOH wurden dazugegeben und 3,5 g bei 75 °C gerührt.

Das Suspensionsmittel wurde abdekantiert, das Produkt in Wasser gelöst, mit verdünnter Salzsäure neutralisiert und 3 Tage gegen Wasser dialysiert. Alternativ kann auch wie unter Beispiel 1 aufgearbeitet werden. Während man mit Variante A bevorzugt SES mit DS_{SE} = 0,3 bis 0,4 erlangt, ergibt Variante B SES, bevorzugt mit DS_{SE} = 0,4 bis 0,6.

### Beispiel 3:

In der nachfolgenden Tabelle 1 werden die molekularen Parameter der erfindungsgemäß verwendeten Stärkederivate (gewonnen aus partiell hydrolysierter Amylosestärke mit einem Amyloseanteil von 70 Gew.-%) und deren Ausbreitmaß gemäß DIN 1164/EN-196 im Vergleich zu handelsüblichen Verflüssigern beschrieben.

**Tabelle 1:**

| Versuch | Verflüssiger | Molekulargewicht ¹⁾ | Substitution ²⁾ AGE | Viskosität ³⁾ (20%-ige Lsg.) [Pa * s] | | Ausbreitmaß | Ausbreitmaß - Nullprobe |
|---|---|---|---|---|---|---|---|
| | | | | η₁ | η₃₀₀ | [cm] | [cm] |
| 1 | SES | DP_{w}= 43 | DS_{SE}=0.55 | 0.010 | 0.008 | 30.0 | +15.5 |
| 2 | SES | DP_{w}= 63 | DS_{SE}=0.35 | 0.020 | 0.012 | 25.1 | +10.6 |
| 3 | SES | DP_{w}= 63 | DS_{SE}=0.36 | 10.000 | 0.030 | 22.2 | +8.6 |
| 4 | SES | DP_{w}= 63 | DS_{SE}=0.38 | 0.500 | 0.020 | 24.0 | +10.4 |
| 5 | SES | DP_{w}= 63 | DS_{SE}=0.43 | 0.020 | 0.015 | 27.0 | +13.4 |
| 6 | SES | DP_{w}= 160 | DS_{SE}=0.30 | 0.350 | 0.095 | 19.7 | +3.9 |
| 7 | SES | DP_{w}= 160 | DS_{SE}=0.45 | 0.030 | 0.027 | 28.0 | +12.2 |
| 8 | SEHES | DP_{w}= 122 | MS_{HE}=1.80 | n.b. | n.b. | 21.3 | +5.5 |
| | | | DS_{SE}=0.80 | | | | |
| 9 | Liquiment N | | | | | 20.6 | |
| 10 | Melment L10 | | | | | 18.9 | |
| 11 | Nullprobe | | | | | 15.8 | |

### Beispiel 4:

In der nachfolgenden Tabelle 2 sind die Ergebnisse bezüglich der Verflüssigungswirkung für Mörtel gemäß DIN 1164/EN-96 mit den erfindungsgemäß eingesetzten Stärkederivaten zusammengefasst. Normgemäß wurden hierzu 450 g Portlandzement (Mannersdorf 375 H), 450 Normensand fein, 900 g Normensand grob sowie 225 g Anmachwasser (mit dem gelösten Polysaccharid-Derivat) vermischt und anschließend das Ausbreitmaß bestimmt.

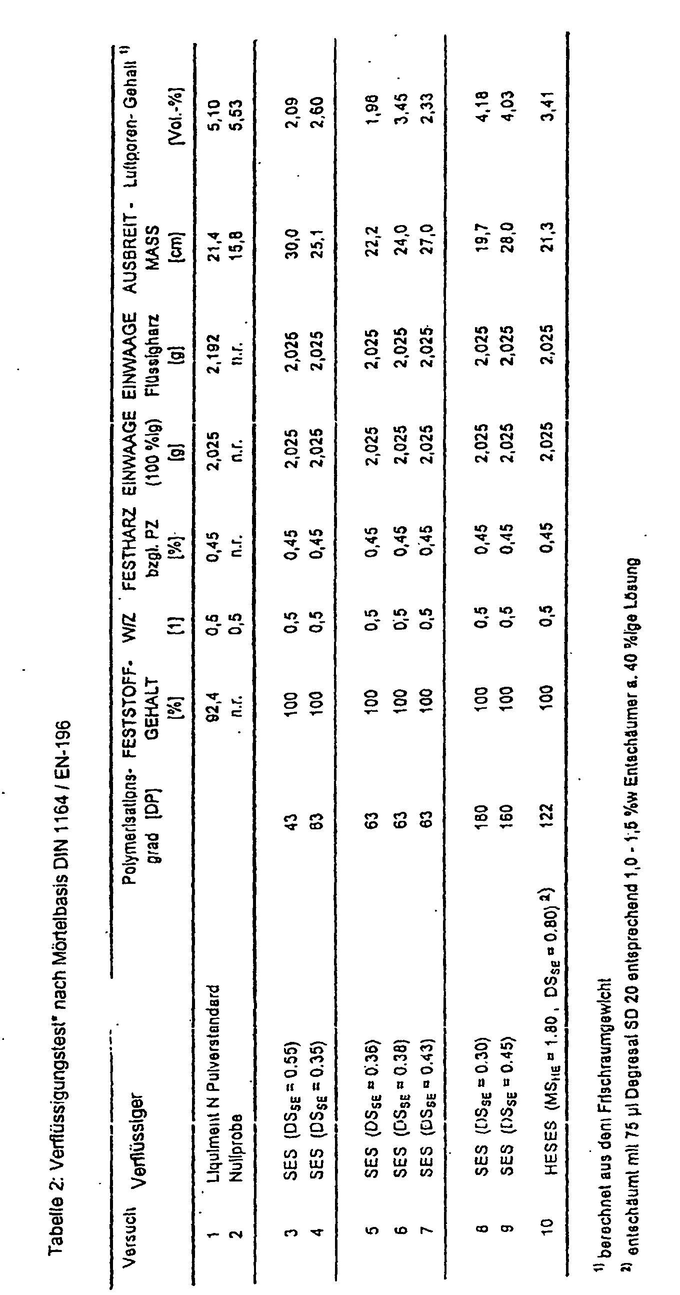

### Beispiel 5:

In der nachfolgenden Tabelle 3 wird der Einfluss des Amylose-Gehalts der partiell hydrolysierten Stärken auf die verflüssigende Wirkung in Mörtelgemischen verdeutlicht.

**Tabelle 3:**

| Versuch | Stärke | Chemische Modifizierung | | Viskosität (20%-Lsg.) [Pa * s] | | Ausbreitmaß | Ausbreitmaß - Nullprobe |
|---|---|---|---|---|---|---|---|
| | | 1.) Partielle Depolymerisation | 2.) Sulfoethylierung | η₁ | η₃₀₀ | [cm] | [cm] |
| 1 (E) | Amylomaisstärke ¹⁾ | Säurchydrolyse | DS_{SE}=0.55 | 0.010 | 0.008 | 30.0 | +15.5 |
| 2 (V) | Wachsmaisstärke ²⁾ | Säurehydrolyse | DS_{SE}=0.45 | 0.070 | 0.050 | 12.0 | -1.6 |
| 3 (V) | Wachsmaisstärke ²⁾ | Oxidativ | DS_{SE}=0.49 | 0.060 | 0.040 | 12.8 | -1.7 |
| 4 (V) | Maisstärke ³⁾ | Oxidativ | DS_{SE}=0.48 | 0.045 | 0.030 | 13.2 | -1.3 |
| 5 (V) | Maisstärke ³⁾ | Thermisch | DS_{SE}=0.55 | 0.045 | 0.030 | 13.7 | -0.8 |
| | Kartoffelstärke ³⁾ | Oxidativ | DS_{SE}=0.48 | 0.060 | 0.045 | 12.3 | -2.2 |

| | | | | | | | |
|---|---|---|---|---|---|---|---|
| ¹⁾ Amylosegehalt 70% | | | | | | | |
| ²⁾ Amylosegehalt 1 % | | | | | | | |
| ³⁾ Amylosegehalt < 25% | | | | | | | |

### Beispiel 6:

In der nachfolgenden Tabelle 4 wird der Einfluss der partiellen Hydrolyse (Depolymerisation) von Amylomaisstärke auf die verflüssigende Wirkung in Mörtelgemischen dargestellt.

**Tabelle 4:**

| Versuch | Verflüssiger | Amylomaisstärke (ca. 70% Amylose) a) depolymerisiert b) nicht abgebaut | Substitution AGE | Viskosität (20%-Lsg.) [Pa * s] | | Ausbreitmaß | Ausbreitmaß - Nullprobe |
|---|---|---|---|---|---|---|---|
| | | | | η₁ | η₃₀₀ | [cm] | [cm] |
| 1 (E) | SES | a) DP_{w}=43 | DS_{SE}=0.55 | 0.010 | 0.008 | 30.0 | +15.5 |
| 2 (V) | SES | b) nicht hydrolysiert | DS_{SE}=0.56 | 0.230 | 0.120 | 11.3 | -3.2 |

## Patentansprüche

1. Verwendung von wasserlöslichen Polysaccharid-Derivaten als Verflüssiger für mineralische Bindemittelsuspensionen,
**dadurch gekennzeichnet,**
**dass** man als Polysaccharid-Derivat eine partiell hydrolysierte amylosereiche Stärke einsetzt, die noch Sulfoalkylgruppen mit 1 bis 4 C-Atomen aufweist, wobei der Amyloseanteil der partiell hydrolysierten amylosereichen Stärke 30 bis 90 Gew.-% beträgt.

2. Verwendung nach Anspruch 1,
**dadurch gekennzeichnet,**
**dass** die partiell hydrolysierte amolysereiche Stärke einen Polymerisationsgrad (DP) von 40 bis 500 besitzt.

3. Verwendung nach einem der Ansprüche 1 oder 2,
**dadurch gekennzeichnet,**
**dass** der Amyloseanteil der partiell hydrolysierten amylosereichen Stärke 40 bis 75 Gew.-% beträgt.

4. Verwendung nach einem der Ansprüche 1 bis 3,
**dadurch gekennzeichnet,**
**dass** der Substitutionsgrad (DS) für die Sulfoalkylgruppen der partiell hydrolysierten amylosereichen Stärke zwischen 0,2 und 2,0 liegt.

5. Verwendung nach einem der Ansprüche 1 bis 4,
**dadurch gekennzeichnet,**
**dass** die partiell hydrolysierte amylosereiche Stärke Sulfoethylgruppen mit einem Substitutionsgrad (DS) zwischen 0,3 und 1,0 aufweist.

6. Verwendung nach einem der Ansprüche 1 bis 5,
**dadurch gekennzeichnet,**
**dass** das Polysaccharid-Derivat in einer Menge von 0,1 bis 5,0 Gew.-%, bezogen auf den Bindemittel-Gehalt der mineralischen Suspension, eingesetzt wird.

7. Verwendung nach einem der Ansprüche 1 bis 6,
**dadurch gekennzeichnet,**
**dass** das mineralische Bindemittel aus Zement, Kalk und/oder Gips besteht.

## Claims

1. Use of water-soluble polysaccharide derivatives as plasticizing agents for mineral binding agent suspensions,
**characterized in that**
a partially hydrolyzed amylose-rich starch which also has sulphoalkyl groups containing 1 to 4 C atoms, the amylose content of the partially hydrolyzed amylose-rich starch being 30 to 90 % by weight, is used as the polysaccharide derivative.

2. Use as claimed in claim 1,
**characterized in that**
the partially hydrolyzed, amylose-rich starch has a degree of polymerization (DP) of 40 to 500.

3. Use as claimed in one of the claims 1 or 2,
**characterized in that**
the amylose content of the partially hydrolyzed amylose-rich starch is 40 to 75 % by weight.

4. Use as claimed in one of the claims 1 to 3,
**characterized in that**
the degree of substitution (DS) for the sulphoalkyl groups of the partially hydrolyzed amylose-rich starch is between 0.2 and 2.0.

5. Use as claimed in one of the claims 1 to 4,
**characterized in that**
the partially hydrolyzed amylose-rich starch has sulphoethyl groups with a degree of substitution (DS) of between 0.3 and 1.0.

6. Use as claimed in one of the claims 1 to 5,
**characterized in that**
the polysaccharide derivative is used in an amount of 0.1 to 5.0 % by weight relative to the content of the binding agent of the mineral suspension.

7. Use as claimed in one of the claims 1 to 6,
**characterized in that**
the mineral binding agent is composed of cement, lime and/or gypsum.

## Revendications

1. Utilisation de dérivés de polysaccharides hydrosolubles en tant que fluidifiant pour des suspensions de liants minéraux,
**caractérisée en ce que**
on utilise en tant que dérivé de polysaccharide un amidon riche en amylose partiellement hydrolysé qui présente encore des groupes sulfoalkyle ayant 1 à 4 atomes C, où la teneur en amylose de l'amidon riche en amylose partiellement hydrolysé est de 30 à 90 % en poids.

2. Utilisation selon la revendication 1,
**caractérisée en ce que**
l'amidon riche en amylose partiellement hydrolysé possède un degré de polymérisation (DP) de 40 à 500.

3. Utilisation selon l'une des revendications 1 ou 2,
**caractérisée en ce que**
la teneur amylose de l'amidon riche en amylose partiellement hydrolysé est de 40 à 75 % en poids.

4. Utilisation selon l'une des revendications 1 à 3,
**caractérisée en ce que**
le degré de substitution (DS) pour les groupes sulfoalkyle de l'amidon riche en amylose partiellement hydrolysé se situe entre 0,2 et 2,0.

5. Utilisation selon l'une des revendications 1 à 4,
**caractérisée en ce que**
l'amidon riche en amylose partiellement hydrolysé présente des groupes sulfoéthyle avec un degré de substitution (DS) entre 0,3 et 1,0.

6. Utilisation selon l'une des revendications 1 à 5,
**caractérisée en ce que**
le dérivé de polysaccharide est mis en oeuvre dans une
quantité de 0,1 à 5,0 % en poids, rapportée à la teneur en liant de la suspension minérale.

7. Utilisation selon l'une des revendications 1 à 6,
**caractérisée en ce que**
le liant minéral consiste en ciment, chaux et/ou plâtre.
